# EUROPÄISCHE PATENTSCHRIFT

(11) **EP 1 127 664 B1**
(45) Veröffentlichungstag und Bekanntmachung des Hinweises auf die Patenterteilung: **29.12.2004**
(21) Anmeldenummer: 01102370.2
(22) Anmeldetag: 02.02.2001
(51) Int. Cl.: B25J 19/00, B25J 21/00, G21F 7/06

(54) **Arbeitskammer mit einer automatisch abdichtbaren Durchführung für einen in die Arbeitskammer eingreifenden Manipulatorarm**
Working chamber with an automatically sealable opening for the insertion of a manipulator arm
Chambre de travail comprenant une ouverture automatiquement étancheifiable pour l'introduction d'un bras de manipulateur

(30) Priorität: 21.02.2000 DE 10007831; 13.12.2000 DE 10062133
(43) Veröffentlichungstag der Anmeldung: 29.08.2001
(73) Patentinhaber: SCHLICK-Roto-Jet Maschinenbau GmbH, D-48629 Metelen (DE)
(72) Erfinder: Nadicksbernd, Reinhard, 48607 Ochtrup (DE)
(74) Vertreter: Hoffmeister, Helmut, Dr. Dipl.-Phys.

(56) Entgegenhaltungen:
- DD-A- 234 823
- PATENT ABSTRACTS OF JAPAN vol. 011, no. 063 (C-406), 26. Februar 1987 (1987-02-26) & JP 61 222566 A (NISSAN SHATAI CO LTD), 3. Oktober 1986 (1986-10-03)
- PATENT ABSTRACTS OF JAPAN vol. 003, no. 015 (E-089), 9. Februar 1979 (1979-02-09) -& JP 53 143294 A (HITACHI CABLE LTD), 13. Dezember 1978 (1978-12-13)

## Beschreibung

Die Erfindung betrifft eine Arbeitskammer mit einer automatisch abdichtbaren Durchführung für einen in die Arbeitskammer eingreifenden Manipulatorarm.

In vielen Bereichen der industriellen Fertigung werden automatisch steuerbare Handhabungsgeräte (Manipulatoren) einigesetzt, um bei Werkzeugmaschinen und Bearbeitungszentren Werkstücke automatisch zu- und abzuführen. Für die Bestückung von Maschinen haben sich Portalroboter bewährt, die linear, in kartesischen Koordinaten verfahrbar sind, so dass Positionnieraufgaben einfach berechnet und unter schneller Beschleunigung ausgeführt werden können. Schwierig ist jedoch der Einsatz solcher Portalroboter bei Bearbeitungszentren, die gegenüber der Umgebung durch eine Arbeitskammer abgeschottet sind, beispielsweise Lackierkabinen oder Strahlkammern. Um den Manipulator vor Verschmutzungen und/oder Beschädigungen zu schützen, ist es erforderlich, diesen außerhalb der Arbeitskammer anzuordnen und nur einzelne Glieder, beispielsweise den Greifer für das Werkstück, in die Kammer hineinragen zu lassen. Zugleich muss aber ah der Durchführungsstelle der Austritt von Verunreinigungen aus der Kammer heraus durch Dichtungen verhindert werden.

Aus der US 4 882 881 ist eine Positioniervorrichtung bekannt, die an der Oberseite einer abgeschlossenen Kammer verfährt und von außen in diese eingreift, so dass Werkstücke innerhalb der Kammer positioniert werden können. Um bei einer Bewegung der Positioniervorrichtung während der laufenden Werkstückbearbeitung den Austritt von Partikeln aus der Arbeitskammer in die Umgebung zu unterbinden, sind sehr aufwendige Dichtungsanordnungen vorgesehen. Die Positioniervorrichtung und die zugehörigen Dichtungsanordnungen sind jedoch nur in zwei Richtungen verfahrbar, so dass Positionierungen nicht in beliebiger Orientierung des Werkstücks im Raum ausgeführt werden können.

In der industriellen Fertigung werden auch Manipulatoren eingesetzt, um während der Bearbeitung in abgeschirmten Arbeitskammern einzelne Werkstücke zu halten und/oder zu führen, wenn der Aufenthalt in diesen Arbeitskammern für Menschen gesundheitsgefährdend oder aus sonstigen Gründen nicht angezeigt ist. Mit mehrachsigen Manipulatoren ist es möglich, das Werkstück entlang einer räumlichen Bahn zu führen und dabei außerdem während der Bewegung die Orientierung des Werkstücks, z.B. in Bezug auf eine Strahl- oder Lackierdüse, zu verändern. Für die Führung von Werkstücken im Wirkungsbereich von Lackierdüsen, Strahlvorrichtungen für die abrasive Oberflächenbehandlung oder dergleichen haben sich Industrieroboter mit einer 6-Achsen-Knickarm-Kinematik bewährt, die drei Knickachsen und drei Rotationsachsen umfasst. Mit einer solchen Kinematik kann jeder Punkt im Arbeitsraum des Industrieroboters mit beliebiger räumlicher Orientierung der Endachse angefahrenen werden.

Aus der DD-PS 234 823 ist eine Strahlkammeranordnung bekannt, bei der eine Strahldüse mittels eines sechsachsigen Industrieroboters geführt wird und auf ein stationär gehaltenes Werkstück wirkt, das auf einem verfahrbaren Wagen gehalten ist. Die Düse kann aufgrund der sechs Freiheitsgrade des Industrieroboters beliebig in der Arbeitskammer positioniert werden, so dass die Werkstücke von allen Seiten behandelt werden können. Die Automatisierung ermöglicht einen großen Durchsatz. Nachteilig ist hier jedoch, dass die Anlage nicht für das großflächige Strahlen mit Schleuderrädern geeignet ist, da diese nur stationär betrieben werden können und schon aufgrund ihres hohen Gewichtes nicht für eine Positionierung mittels eines Manipulators geeignet sind. Da der Roboter durch eine fest montierte, jalousettenartige Dichtung gegenüber der Arbeitskammer abgeschirmt ist, ist es bei dieser Anlage wegen der nicht lösbaren Dichtung nicht möglich, das Werkstück mit dem Industrieroboter in die Kammer einzubringen, darin zu führen und wieder herauszunehmen.

Eine weitere Anlage dieser Art ist in der US 6 004 190 offenbart. Auch hier ist der von außen in die abgeschottete Arbeitskammer eingreifende Industrieroboter, der eine Strahldüse führt, durch eine flexible, aber fest montierte Dichtung mit der Wandung der Arbeitskammer verbunden. Es können somit keine Werkstücke mit dem Industrieroboter in die Arbeitskammer eingebracht und herausgeholt werden.

Es stellt sich daher die Aufgabe, eine Arbeitskammer mit einer Durchführung anzugeben, durch die hindurch ein Manipulatorarm in die Kammer eingreifen kann, wobei die Durchführung vor Beginn des Arbeitsbetriebs in der Kammer automatisch so abdichtbar ist, dass ein Austritt von Partikeln aus der Arbeitskammer während des Betriebs verhindert wird.

Diese Aufgabe wird gelöst durch eine Arbeitskammer mit einer automatisch abdichtbaren Durchführung für einen in die Arbeitskammer eingreifenden Manipulatorarm, mit
- wenigstens einer mit einer Ausnehmung versehenen Arbeitskammerwandung;
- einem Durchführungsrohr, das in die Ausnehmung in der Arbeitskammerwandung eingesetzt ist und mit dieser verbunden ist;
- einem hohlen, über ein Ventil mit Druckgas beaufschlagbaren flexiblen Dichtungselement, das mittels seiner wenigstens einen innenliegenden Ausnehmung dichtend auf einen Manipulatorarm aufzuziehen ist und das eine den Manipulatorarm vollumfänglich umhüllende Wandung aufweist, welche bei Beaufschlagung des Dichtungselements mit Druckgas an die Innenwandung des Durchführungsröhrenelements anlegbar ist.

Nachfolgend ist unter einem Torus ein Körper zu verstehen, der durch Rotation eines kreisförmigen Querschnitts entlang einer Kreisbahn definiert ist.

Unter einem Halbtorus soll ein Körper verstanden werden, der bei einem Torus in der Ebene der Kreisbahn ausgeführten Schnitt einen ringförmigen Körper mit halbkreisförmigem Querschnitt ergibt.

Als Durchführungsrohr wird ein länglicher Körper mit einem kreisförmigen, ellipsoiden oder polygonalen Querschnitt bezeichnet.

Vorteilhaft bei der erfindungsgemäßen Arbeitskammer ist insbesondere, dass automatisch, also ohne Montagetätigkeiten oder andere manuelle Eingriffe, eine sichere Abdichtung des Manipulatorarms in der Durchführung hergestellt und wieder gelöst werden kann. Dabei kann der Manipulatorarm während des Betriebs unter Beibehaltung der Abdichtung innerhalb der Durchführung bewegt werden. Mit der erfindungsgemäßen Ausbildung der Arbeitskammer können einzelne Werkstücke in die Arbeitskammer eingebracht werden. Die Abdichtung kann, unmittelbar bevor der Arbeitsvorgang in der Kammer beginnt, automatisch bewirkt werden, beispielsweise über eine Programmablaufsteuerung, die ein pneumatisches Ventil öffnet und so Druckgas in das Dichtungselement einleitet, wodurch das flexible Dichtungselement aufgeblasen wird. In einer ersten Ausführungsform legt sich das mit dem Roboterarm verbundene Dichtungselement von innen an das Durchführungsrohr an. Ein Eingriff von Bedienpersonal ist nicht erforderlich.

Nach Beendigung des Arbeitsvorgangs in der Kammer kann die Abdichtung an dem Durchführungsrohr automatisch wieder gelöst werden, so dass der Manipulatorarm frei beweglich ist und mit dem Werkstück aus der Kammer heraus bewegt werden kann.

Von Vorteil ist auch, dass der Manipulatorarm nicht unbedingt koaxial zu dem Durchführungsrohr angeordnet sein muss und zudem innerhalb dessen verschoben werden kann, so dass die Lage des Manipulatorarms in dem Durchführungsrohr nicht exakt definiert oder justiert sein muss. Die Arbeitskammer der Erfindung ermöglicht noch während des Arbeitsbetriebs in der Kammer eine Bewegung des in dem Durchführungsrohr abgedichtet liegenden Manipulatorarms in bis zu fünf Freiheitsgraden, nämlich:
- eine translatorische Bewegung parallel zur Achse des Durchführungsrohrs,
- eine Rotation um die Längsachse des Manipulatorarms, eine zweidimensionale Verschiebung der Längsachse des Manipulatorarms gegenüber der Achse des Durchführungsrohrs, in der Querschnittsebene des Durchführungsrohrs, sowie
- eine Neigung des Manipulatorarms gegenüber der Mittelachse des Durchführungsrohrs.

Da nur das Endglied des Manipulators in die Kammer eingreifen braucht, können wichtige Baugruppen des Manipulators, die auch die elektrischen Antriebe enthalten,-außerhalb der Kammer und damit außerhalb des Schmutzbereichs angeordnet sein.

Erfindungswesentlich ist, dass das Dichtungselement zum-einen wenigstens eine innere Ausnehmung aufweist, so dass das Dichtungselement auf den Manipulatorarm aufziehbar ist und Manipulatorarm und Dichtungselement hierdurch schmutzdicht verbunden sind. Zum anderen ist vorgesehen, dass das Dichtungselement hohl ist und über ein Ventil mit Druckgas beispielsweise Druckluft, aufblasbar ist. Solange das Gas aus dem durch das Dichtungselement gebildeten Hohlkörper abgelassen ist, kann der Manipulatorarm mit dem schlaffen Dichtungselement einfach durch das Durchführungsrohr geführt werden. Danach wird das Dichtungselement durch Druckbeaufschlagung in seinem Volumen erweitert, bis es an das Durchführungsrohr angepresst wird.

In einer weiteren Ausführungsform ist das Dichtungselement mit wenigstens einem Teil seines Außenumfangs an dem Durchführungsrohr befestigt ist; vor einer Beaufschlagung des Dichtungselements mit Druckgas ist der Querschnitt der innenliegenden Ausnehmung des Dichtungselements größer als der Querschnitt des Manipulatorarms und der Manipulatorarm ist frei durch die innenliegende Ausnehmung des Dichtungselements führbar. Dabei verengt sich die innenliegende Ausnehmung des Dichtungselements bei einer Beaufschlagung mit Druckgas und zieht sich dichtend auf den in der Ausnehmung geführten Manipulatorarm auf. Vorteilhaft hierbei ist, dass das Dichtungselement nicht fest mit dem Manipulatorarm verbunden ist und so dessen bewegte Masse nicht erhöht ist. Außerdem sind zur Druckbeaufschlagung keine Zuleitungen zum Manipulatorarm erforderlich. Die Verringerung der zu bewegenden Masse, insbesondere an den Endgliedern des Manipulators, führt zu einer Erhöhung der Arbeitsgeschwindigkeit und einer reduzierten mechanischen Belastung der Lager an den Gelenken. Das Dichtungselement behindert die Bewegungsfreiheit solange nicht, bis die Dichtung hergestellt ist.

In einer besonders einfachen und kostengünstigen Ausführungsform ist das Dichtungselement torusförmig nach Art eines Schwimmreifens.

In einer weiteren Ausführungsform ist das Dichtungselement röhrenförmig und besteht aus einem Außenschlauch, einem vorderseitigen Halbtorus, einem rückseitigen Halbtorus und einem dichtend auf den Manipulatorarm aufziehbaren Innenschlauch, wobei jeweils der Außenumfang des Halbtorus mit einem Ende des Außenschlauchs verbunden ist und jeweils der Innenumfang des Halbtorus mit einem Ende des Innenschlauchs verbunden ist. Das flexible Dichtungselement hat, wenn es aufgepumpt zwischen Manipulatorarm und Durchführungsrohr liegt, die Form einer doppelwandigen Röhre. Vorteilhaft ist hierbei, dass sich eine längliche Form ergibt, wodurch die Berührungsfläche zwischen Durchführungsrohr und Dichtungselement erweitert und die Dichtwirkung, insbesondere bei Bewegungen des Manipulatorarms in dem Durchführungsrohr verbessert ist.

In einer bevorzugten Ausführungsform ist das Dichtungselement röhrenförmig aus einem Außenschlauch, einem vorderseitigen Halbtorus, einem rückseitigen Halbtorus und zwei auf den Manipulatorarm dichtend aufziehbaren Ringflanschen gebildet, wobei der Außenschlauch endseitig jeweils mit dem Außenumfang des Halbtorus verbunden ist und jeweils der Innenumfang des Halbtorus an einem Ringflansch befestigt ist. Auch hier besteht eine erhöhte Dichtwirkung. Die starre Verbindung des Dichtelements mit dem Manipulatorarm über die Ringflansche verhindert außerdem, dass das Dichtungselement durch die Bewegungen des Manipulatorarms im fortwährenden Betrieb abgestreift wird.

vorteilhaft ist auch eine Ausführungsform, bei der das Durchführungsrohr wenigstens eine in Richtung des Inneren der Arbeitskammer gerichtete Spüldüse und/oder Gasdüse aufweist. Die Spüldüse kann mit Flüssigkeiten und die Gasdüse mit Druckluft betrieben werden. Nach dem Ablassen des Gases aus dem Dichtungselement entsteht ein lichter Ringspalt zwischen dem Außenumfang des Dichtungselements und dem Innenumfang des Durchführungsrohrs. Verunreinigungen, die während des Betriebs bis in diesen Ringspalt eingedrungen sind, können mit der wenigstens einen Düse in die Kammer zurückgeblasen oder -gespült werden.

Weitere vorteilhafte Ausgestaltungen sind den weiteren Unteransprüchen sowie den nachfolgend erläuterten Beispielen zu entnehmen.

Die Erfindung wird nachfolgend mit Bezug auf die Zeichnung näher beschrieben. Es zeigen im einzelnen:
- Fig. 1: einen Ausschnitt einer Strahlkammer mit einem von außen eingreifenden Industrieroboter in seitlicher Schnittansicht;
- Fig. 2a: eine automatisch abdichtbare Durchführung in der Arbeitskammer mit einem darin eingeführten Manipulatorarm in schematischer Schnittansicht;
- Fig. 2b-2d: die Durchführung aus Figur 2 mit verschiedenen Stellungen des Manipulatorm, jeweils in schematischer Schnittansicht;
- Fig. 3a,3b: eine teilbare Arbeitskammerwandung mit Schiebetürelementen in verschiedenen Positionene in einer Ansicht von vorn;
- Fig. 4: eine weitere Ausbildung einer automatisch abdichtbare Durchführung und des darin eingeführten Manipulatorarm in schematischer Schnittansicht; und
- Fig. 5a-d: eine weitere Ausführungsform einer automatisch abdichtbaren Durchführung, jeweils in schematischer Schnittansicht bei-verschiedenen Stellungen des Manipulatorarms.

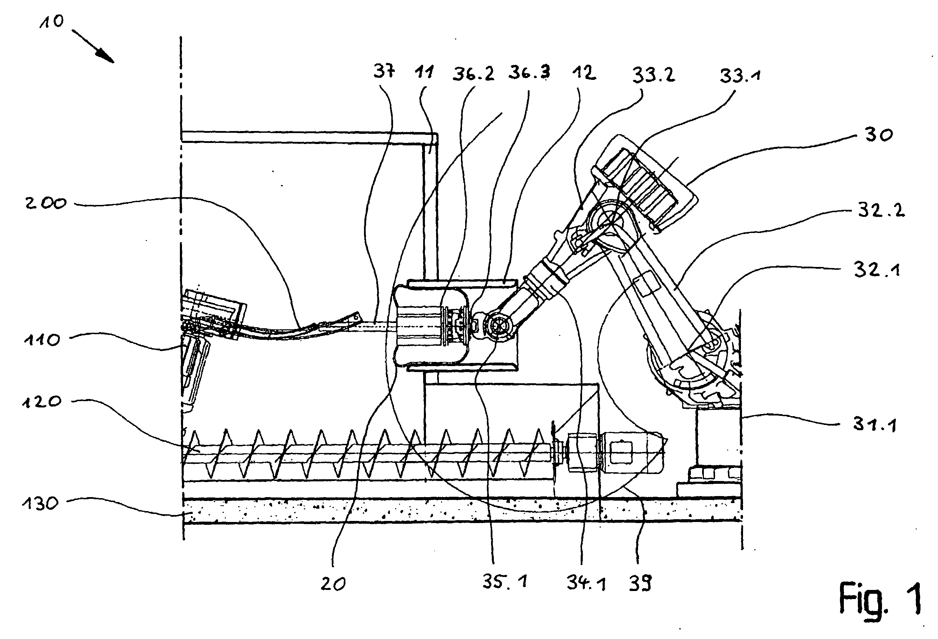

In Fig. 1 ist ein Ausschnitt einer Strahlkammer 10. dargestellt. In der Strahlkammer ist ein ausschnittsweise dargestelltes Schleuderrad 110 zur abrasiven Oberflächenbehandlung angeordnet. Am Boden der Strahlkammer 10 ist eine rotierende Förderschnecke 120 vorgesehen, um herabfallendes Strahlmittel zwecks Aufbereitung und Wiederverwertung aus der Strahlkammer 10 zu fördern. Ein Industrieroboter 30 ist außerhalb der Strahlkammer 10 angeordnet. Der Industrieroboter 30 weist sechs Achsen 31.1, 32.1, 33.1, 34.1, 35.1, 36.1 und damit sechs Freiheitsgrade auf. Die Hochachse 31.1 ist eine Rotationsachse, um die der gesamte Industrieroboter 30 gegenüber dem Fundament 130 rotierbar ist. Aufeinander folgend sind zwei Knickachsen 32.1, 33.1 angeordnet, mit denen der so genannte Oberarm 32.2 und der Unterarm 33.2 geneigt werden können. Hierüber ist das so genannte Handgelenk 35.1, das ein weiteres Knickgelenk ist, im Raum positionierbar. Die Orientierung des Handgelenks 35.1 in Bezug auf den Unterarm 33.2 kann noch durch eine Rotationsachse 34.1 geändert werden. Über die Rotationshandachse 36.3 ist die Roboterhand 36.2 mit dem daran angebrachten Greifer 37 rotierbar. Der Greifer kann zwei oder, insbesondere für runde Werkstücke, mehrere Spannfinger aufweisen und elektrisch, pneumatisch oder hydraulisch betätigbar sein, wie es an sich bekannt ist.

Die Kurve 39 kennzeichnet den durch mit dem Handgelenk 35.1 des Industrieroboters 30 erreichbaren Arbeitsraum.

Ein Werkstück 200 ist in dem Greifer 37 des Industrieroboters 30 gehalten und wird hiermit durch den Wirkungsbereich des Schleuderrads 110 geführt. Das Handgelenk 35.1 und die Roboterhand 36.2 mit dem Greifer 37 befinden sich bei der in Figar 1 dargestellten Arbeitssituation innerhalb eines durch die Arbeitskammerwandung 11 hindurch geführten Durchführungsrohrs 12. Auf die Roboterhand 36.2 ist ein hohles, flexibles Dichtungselement 20 aufgezogen, das mit Druckluft aufgepumpt ist und an die Innenwandung des Durchführungsrohrs 12 angepresst ist, so dass ein Austritt von Schmutz aus dem Inneren der Arbeitskammer 10 unterbunden wird.

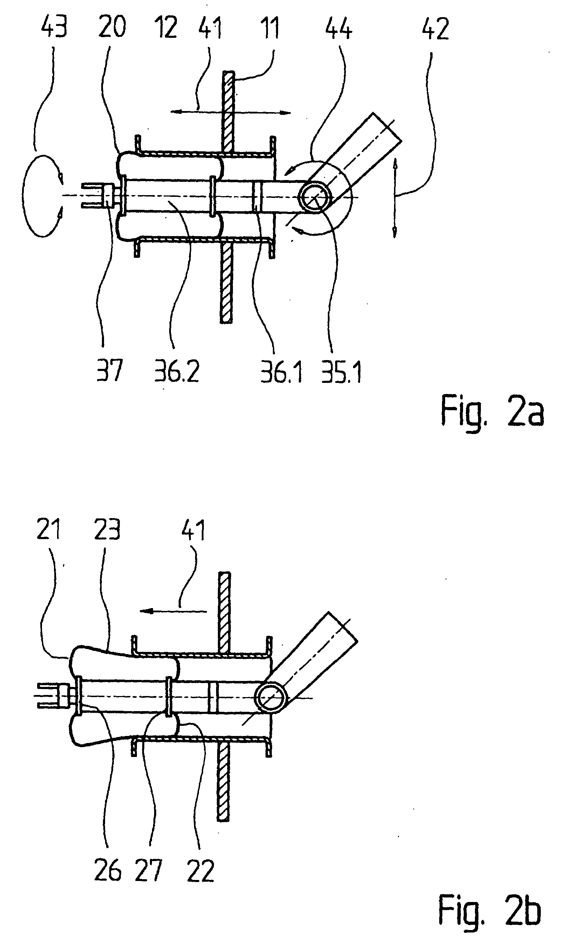

Die Abdichtung der Roboterhand 36.2 am Durchtritt durch die Arbeitskammerwandung 11 und die unter Abdichtung möglichen Bewegungen innerhalb des Durchführungsrohrs 12 sind in den Figuren 2a bis 2d dargestellt.

In dem in Fig. 2a abgebildeten Ausgangszustand befindet sich die Roboterhand 36.2 innerhalb des in die Arbeitskammerwandung 11 eingesetzten Durchführungsrohrs 12. Die Mittelachsen der Roboterhand 36.2 und des Durchführungsrohrs 12 fluchten. Auf die Roboterhand 36.2 ist ein Dichtungselement 20 aufgezogen. Dieses ist mit Druckluft aufgepumpt worden, so dass es sich an die Innenwandung des Dichtungselement 20 anlegt und den Ringspalt zwischen der Roboterhand 36.2 und dem Dichtungselement 20 über den gesamten Umfang ausfüllt.

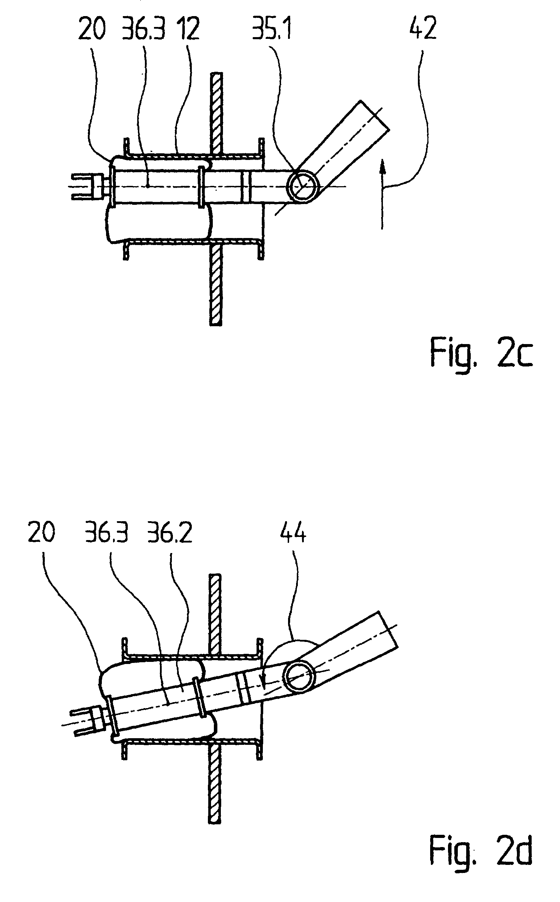

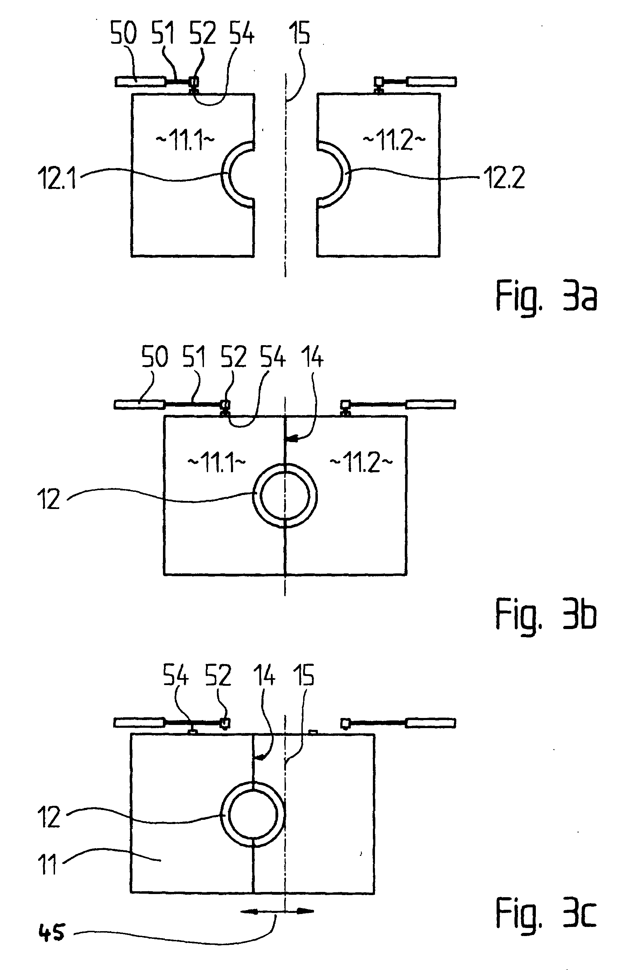

Die Roboterhand 36.2 kann erfindungsgemäß innerhalb des Dichtungselements 20 und unter Aufrechterhaltung der durch das Dichtungselement 20 bewirkten Abdichtung wie folgt bewegt werden:
- Verschiebung parallel zur Mittelachse des Dichtungselements 20 entlang einer mit 41 bezeichneten Roboterhand-Verschiebungsrichtung;
- zweidimensionale Verschiebung der Roboterhand 36.2 in der Querschnittsebene des Durchführungsrohrs 12, entweder in einer mit 42 bezeichneten, vertikalen Handgelenk-Verschiebungsrichtung oder in einer mit 45 (vgl. Fig. 3c) bezeichneten horizontalen Handgelenk-Verschiebungsrichtung;
- Rotation der Roboterhand 36.2 um die Roboterhandachse 36.3 (vgl. Fig. 2c) in der mit 43 bezeichneten Roboterhandachsen-Rotationsrichtung; und
- Neigung der Roboterhand 36.2 gegenüber der Rohrmittelachse des Durchführungsrohrs 12 durch Schwenken des Handgelenks 35.1 in der mit 44 bezeichneten Handgelenk-Schwenkrichtung.

Wie Fig. 2b zeigt, ist die Roboterhand 36.2 durch eine translatorische Verschiebung in Richtung des Pfeils 41 in die Arbeitskammer 10 hinein geschoben worden. Dabei ist das Dichtungselement 20 teilweise aus dem Durchführungsrohr 12 ausgetreten. Es liegt jedoch mit einem ausreichenden Teil seines Volumens noch innerhalb des Durchführungsrohrs 12, so dass die Abdichtung aufrecht erhalten bleibt.

Das Dichtungselement 20 besteht aus einem vorderen Halbtorus 21 und einem hinteren Halbtorus 22, deren äußere Umfänge durch einen Außenschlauch 23 verbunden sind, sowie aus zwei Ringflanschen 26, 27, über die eine feste Kopplung des jeweiligen inneren Umfangs des Halbtorus 21, 22 mit der Roboterhand 36.2 hergestellt ist.

In Fig. 2c ist eine Position dargestellt, in der die Roboterhand 36.2 durch eine Verschiebung des Handgelenks 35.1 in der Handgelenk-Verschiebungsrichtung 42 angehoben worden ist. Die Roboterhandachse 36.3 liegt oberhalb der, nicht dargestellten, Mittelachse des Durchführungsrohrs 12. In der abgebildeten Position hat das Dichtungselement 20 oberhalb der Roboterhand 36.2 ein geringeres Volumen. Aufgrund der allseitigen Druckausbreitung in dem hohlen Dichtungselement 20 ist mit der Aufwärtsbewegung der Roboterhand 36.2 eine größere Menge Druckluft in den unteren Bereich gedrückt worden, so dass die Abdichtung dort aufrecht erhalten bleibt.

Die Abdichtung bleibt bei der erfindungsgemäß abgedichteten Durchführung für einen in die Arbeitskammer eingreifenden Manipulatorarm selbst dann bestehen, wenn nach der in Fig. 2c dargestellten Verschiebung 42 die Roboterhand 36.2 noch zusätzlich durch eine mit 44 bezeichnete Handgelenk-Schwenkbewegung um die Handgelenksachse 35.1 geschwenkt wird, so dass die Roboterhandachse 36.3 schräg gegenüber der Mittelachse des Durchführungsrohrs 12 geneigt ist, wie in Fig. 2d dargestellt ist.

Vorzugsweise ist, wie Fig. 3b zeigt, die Arbeitskammerwandung zweiteilig, in Form von zwei gegeneinander verschiebbaren Schiebetürelementen 11.1, 11.2 ausgeführt. Auch das Durchführungsrohr 12 ist zweiteilig aus zwei Halbschalen 12.1, 12.2 gebildet, die jeweils im Bereich der Stoßkante 14 in die Schiebetürelemente 11.1, 11.2 eingesetzt sind. Liegen die Schiebetürelemente 11.1, 11.2 an der Stoßkante 14 aneinander, so ergänzen sich die Halbschalen 12.1, 12.2 zu dem Durchführungsrohr 12. Durch die Teilung kann die Arbeitskammer 10 zwischen den auseinander geschobenen Schiebetürelementen 11.1, 11.2 so weit geöffnet werden, dass auch große Werkstücke mit dem Industrieroboter 30 in die Kammer eingebracht werden können, die nicht mehr durch ein einteiliges Durchführungsrohr 12 hindurch zu führen sind. Außerdem kann die Zykluszeit verkürzt werden, da nicht mehr das vollständige Erschlaffen des Dichtungselements 20 durch Ablassen von Druckgas abgewartet werden braucht. Durch Auffahren der Schiebetürelemente 11.1, 11.2 wird die Röboterhand 36.2 mitsamt dem Dichtungselement 20 schlagartig freigelegt. Die Roboterhand 36.2 kann sofort mit dem in dem Greifer 37 gehaltenen Werkstück 200 aus der Arbeitskammer 10 heraus zu einer Entladeposition transportiert werden. Während des Transports des schon bearbeiteten Werkstücks und der Aufnahme eines weiteren Werkstücks kann der-Druck aus dem Dichtungselement 20 allmählich abgelassen werden, damit das Dichtungselement 20 zur Herstellung der Abdichtung im nächsten Fertigungszyklus vorbereitet ist.

Das Zusammenwirken des Industrieroboter 30 mit den Schiebetürelementen 11.1, 11.2 sei unter Bezug auf die Figuren 3a bis 3c erläutert.

Fig. 3a zeigt die geöffnete Stellung der Schiebetürelemente 11.1, 11.2 mit den Halbschalen 12.1, 12.2, nachdem die hier nicht dargestellte Roboterhand etwa im Bereich der Mittellinie 15 in die Arbeitskammer 10 eingeschwenkt ist.

Jedes der Schiebetürelemente 11.1, 11.2 kann über einen Pneumatikzylinder 50 verschoben werden. Hierzu ist jeweils am Ende einer Kolbenstange 51 des Pneumatikzylinders 50 ein fernbetätigbarer Kupplungsstift 52 angebracht, der im ausgefahrenen-Zustand in eine entsprechende Kupplungsaufnahme 54 an der Oberkante des Schiebetürelements 11.1, 11.2 eingreift. Durch Druckbeaufschlagung des Pneumatikzylinders 50 werden die Schiebetürelemente 11.1, 11.2 zur Mittellinie 15 hin geschoben, bis sie an einer Stoßkante 14 aneinanderstoßen und eine geschlossene Arbeitskammerwandung 11 ausbilden, wie insbesondere Fig. 3b zeigt. Die Halbschalen 12.1, 12.2 ergänzen sich gleichzeitig zu einem geschlossenen Durchführungsrohr 12, das die Roboterhand umhüllt. Die beiden Schiebetürelemente 11.1, 11.2 werden noch durch eine nicht dargestellte, fernbetätigbare Kupplungsvorrichtung miteinander verbunden.

Der Kupplungsstift 52 wird anschließend jeweils fernbetätigt aus der Kupplungsaufnahme 54 heraus gezogen, so dass die Schiebetürelemente 11.1, 11.2 von ihrem Antrieb 50 entkoppelt sind. Damit ist das Paket der untereinander verbundenen Schiebetürelemente 11.1, 11.2 allein durch die Bewegung des Industrieroboters 30 in der mit 45 in Fig. 3c bezeichneten Richtung verschiebbar. Die Roboterhand 37 mit dem gehaltenen Werkstück 200 kann innerhalb der Arbeitskammer 10 über eine noch größere Distanz bewegt werden, als durch die Bewegung der Roboterhand innerhalb des Durchführungsrohrs 12.

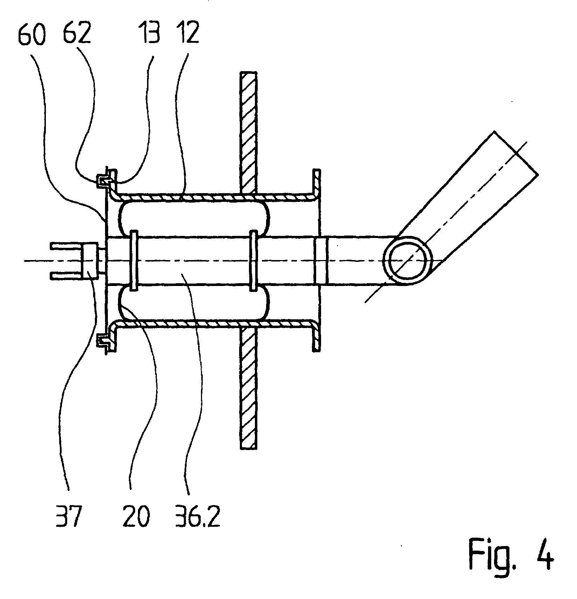

Um die Roboterhand 36.2 und den flexiblen Dichtungsbalg des Dichtungselements 20 vor Verschmutzungen und/oder vor Beschädigungen zu schützen, beispielsweise durch Strahlmittel, kann eine Prallplatte 60 zwischen der Roboterhand 36.2 und dem Greifer 37 angeordnet sein, wie Fig. 4 zeigt. Strahlmittel, das in Richtung des Durchführungsrohrs 12 mit dem darin geführten Roboter 30 wirkt, wird durch die Prallplatte 60 zurückgehalten. Bei Arbeitsvorgängen, bei denen das Werkstück 200 nur um die Roboterhandachse 36.3 rotiert werden braucht, ohne dass eine weitere Bewegung der Roboterhand 36.2 innerhalb,des Durchführungsrohrs 12 notwendig ist, kann durch die Prallplatte 60 bereits eine ausreichende Abdichtung erreicht werden. Hierzu weist die Prallplatte 60 einen Ringkanal 62 auf, der einen entsprechenden Vorsprung 13 an dem Durchführungsrohr 12 umgibt. Die so ausgebildete Labyrinthdichtung hält bereits einen großen Teil des Schmutzes aus der Arbeitskammer 10 zurück. Durch Aufblasen des Dichtungselements 20 kann unabhängig von der Labyrinthdichtung eine zusätzliche, hermetisch wirkende Dichtung hergestellt werden.

Eine Labyrinthdichtung kann auch durch eine Prallplatte erzielt werden, die randseitig einen ringförmigen Kragen aufweist, welcher in einer Ausgangsstellung des Industrieroboters das ins Innere gerichtete Ende des Durchführungsrohrs 12 umgibt. Die Prallplatte schützt dann den Eintritt des Durchführungsrohrs 12 wie ein Deckel auf einer Schüssel. Damit wird eine für viele Anwendungsfälle ausreichende Dichtwirkung erzielt.

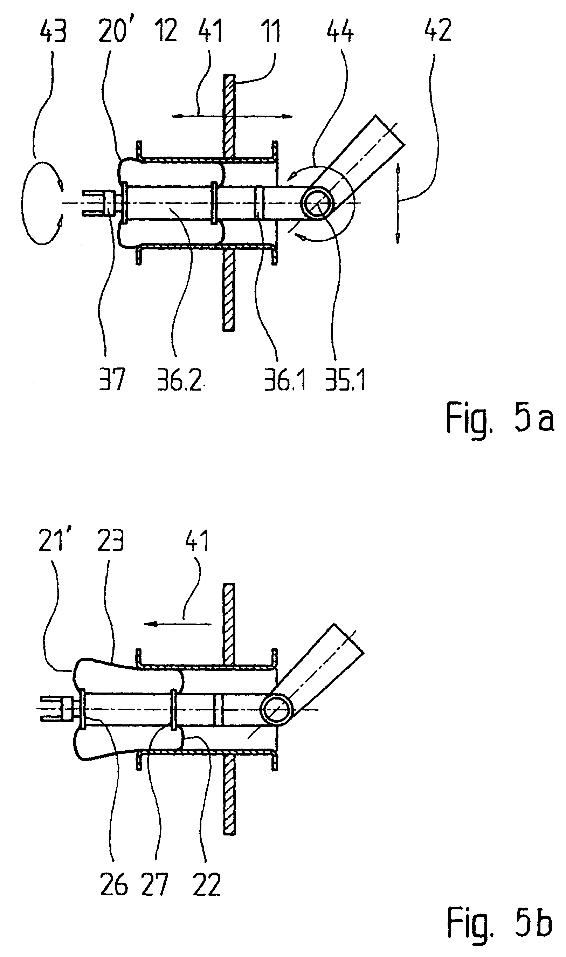

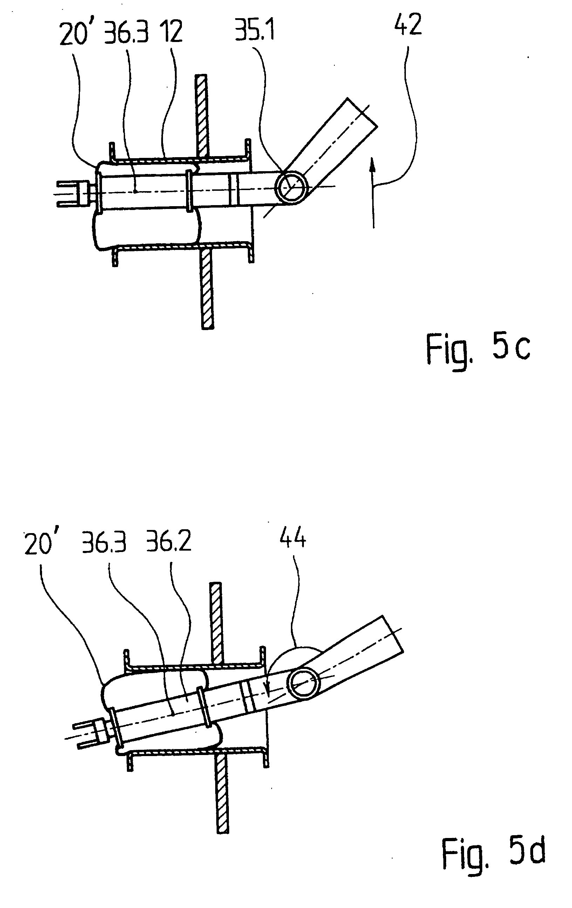

In dem in Fig. 5 abgebildeten Ausführungsbeispiel befindet sich die Roboterhand 36.2 innerhalb des in die Arbeitskammerwandung 11 eingesetzten Durchführungsrohrs 12, an dem ein Dichtungselement 20' befestigt ist. Vor einer Beaufschlagung des Dichtungselements 20' mit Druckluft bildet sich ein Ringspalt zwischen der Roboterhand 36.2 und dem Dichtungselement 20'. Durch Druckbeaufschlagung wird das flexible Dichtungselement 20' aufgepumpt und zieht sich dichtend auf die Roboterhand 36.2 auf, wie in den Fig. 5b bis 5d dargestellt. Auch mit dieser Ausführungsform kann der Roboter die im Zusammenhang mit den Figuren 2a bis 2d beschriebenen rotatorischen und translatorischen Bewegungen unter Abdichtung zur Arbeitskammerwandung durchführen.

## Patentansprüche

1. Arbeitskammer (10) mit einer automatisch abdichtbaren Durchführung für einen in die Arbeitskammer eingreifenden Manipulatorarm mit
- wenigstens einer mit einer Ausnehmung versehenen Arbeitskammerwandung (11);
- einem Durchführungsrohr (12), das in die Ausnehmung in der Arbeitskammerwandung (11) eingesetzt ist und mit dieser verbunden ist;
- einem hohlen, über ein Ventil mit Druckgas beaufschlagbaren flexiblen Dichtungselement (20;20'), das mittels seiner wenigstens einen innenliegenden Ausnehmung dichtend auf einen Manipulatorarm aufzuziehen ist und das eine den Manipulatorarm vollumfänglich umhüllende Wandung aufweist, welche bei Beaufschlagung des Dichtungselements (20;20') mit Druckgas an die Innenwandung (23) des Durchführungsrohrs (12) anlegbar ist.

2. Arbeitskammer (10) nach Anspruch 1, **dadurch gekennzeichnet, dass** das Dichtungselement (20') mit wenigstens einem Teil seines Außenumfangs an dem Durchführungsrohr (12) befestigt ist und dass vor einer Beaufschlagung des Dichtungselements (20') mit Druckgas der Querschnitt der innenliegenden Ausnehmung des Dichtungselements (20') größer ist als der Querschnitt des Manipulatorarms und der Manipulatorarm frei durch die innenliegende Ausnehmung des Dichtungselements (20') führbar ist, wobei sich die innenliegende Ausnehmung des Dichtungselements (20;20') bei einer Beaufschlagung mit Druckgas verengt und auf den in der Ausnehmung geführten Manipulatorarm dichtend aufzieht.

3. Arbeitskammer (10) nach Anspruch 1 oder 2, **dadurch gekennzeichnet, dass** das Dichtungselement (20;20') torusförmig ist.

4. Arbeitskammer (10) nach Anspruch 1 oder 2, **dadurch gekennzeichnet, dass** das Dichtungselement (20;20') röhrenförmig ist und aus einem Außenschlauch (23), einem vorderseitigen Halbtorus (21,21'), einem rückseitigen Halbtorus (22;22') und zwei auf den Manipulatorarm dichtend aufziehbaren Ringflanschen (26,27) gebildet, wobei der Außenschlauch (23) endseitig jeweils mit dem Außenumfang des Halbtorus (21,22;21',22') verbunden ist und jeweils der Innenumfang des Halbtorus (21,22;21',22') an einem Ringflansch (26,27) befestigt ist.

5. Arbeitskammer (10) nach Anspruch 1 oder 2, **dadurch gekennzeichnet, dass** das Dichtungselement (20;20') röhrenförmig ist und aus einem Außenschlauch (23), einem vorderseitigen Halbtorus (21;21'), einem rückseitigen Halbtorus (22;22') und einem dichten auf den Manipulatorarm aufziehbaren Innenschlauch gebildet ist, wobei jeweils der Außenumfang des Halbtorus (21,22;21',22') jeweils mit einem Ende des Außenschlauchs verbunden ist und jeweils der Innenumfang des Halbtorus (21,22;21',22') mit einem Ende des Innenschlauchs verbunden ist.

6. Arbeitskammer (10) nach einem der Ansprüche 1 bis 5, **dadurch gekennzeichnet, dass** das Durchführungsrohr (12) zweiteilig aus zwei Halbschalen (12.1,12.2) gebildet ist und die Arbeitskammerwandung (11) an einer Stoßkante (14) teilbar ist und zwei gegeneinander verschiebbare Schiebetürelemente (11.1,11.2) mit jeweils einer Halbscliale (12.1,12.2) an der Stoßkante (14) umfasst, wobei sich bei den an der Stoßkante (14) aneinanderliegenden Schiebetürelementen (11.1,11.2) die Halbschalen (12.1,12.2) zu dem Durchführungsrohr (12) ergänzen.

7. Arbeitskammer (10) nach Anspruch 6, **dadurch gekennzeichnet, dass** die Schiebetürelemente (11.1,11.2) über ein Kupplungselement mit einem translatorischen Antrieb koppelbar sind.

8. Arbeitskammer (10) nach Anspruch 7, **dadurch gekennzeichnet, dass** das Kupplungselement ein Kupplungsstift (52) ist und der translatorische Antrieb mittels eines Pneumatikyzlinders (50) bewirkt wird.

9. Arbeitskammer (10) nach einem der Ansprüche 1 bis 8, **dadurch gekennzeichnet, dass** das Durchführungsrohr (12) wenigstens eine in Richtung des Inneren der Arbeitskammer (10) gerichtete Spüldüse und/oder Gasdüse aufweist.

10. Arbeitskammer (10) nach einem der Ansprüche 1 bis 9, **gekennzeichnet durch** eine Prallplatte (60), die zwischen einer Roboterhand (36.2) und einem Greifer (37) des in die Arbeitskammer (10) eingreifenden Manipulatorarms befestigbar ist und die den flexiblen Dichtungsbalg des Dichtungselements (20;20') zur Arbeitskammer hin abdeckt.

11. Arbeitskammer nach Anspruch 10, **dadurch gekennzeichnet, dass** die Prallplatte (60) randseitig einen ringförmigen Kragen aufweist, welcher das ins Innere gerichtete Ende des Durchführungsrohrs (12) umgibt.

12. Arbeitskammer nach Anspruch 11, **dadurch gekennzeichnet, dass** die Prallplatte (60) einen Ringkanal (62) aufweist und das Durchführungsrohr (12) einen zu dem Ringkanal (62) kompatiblen Vorsprung (13) aufweist, wobei in einer Ausgangsstellung des Manipulatorarms der Ringkanal (62) und der Vorsprung (13) ineinander greifen und eine-Labyrinthdichtung ausbilden.

## Claims

1. A work chamber (10) with an automatically sealable bushing for a manipulator arm engaging in the work chamber, with
- at least one work chamber wall (11) provided with a an opening;
- a bushing tube (12) which is inserted in the opening in the work chamber wall (11) and is connected thereto;
- a hollow flexible sealing element (20; 20'), which is adapted to be subjected to pressure gas via a valve and which, by means of its at least one inside opening, can be pulled sealingly on to a manipulator arm and which has a wall completely peripherally enclosing the manipulator arm, which wall, when the sealing element (20; 20') is subjected to pressure gas, is adapted to be applied against the inner wall (23) of the bushing tube (12).

2. A work chamber (10) according to claim 1, **characterised in that** the sealing element (20') is fixed by at least part of its outer periphery on the bushing tube (12) and **in that** before the sealing element (20') is subjected to pressure gas the cross-section of the inner opening of the sealing element (20') is larger than the cross-section of the manipulator arm and the manipulator arm can be passed freely through the inner opening of the sealing element (20'), the inner opening of the sealing element (20; 20') being constricted when subjected to pressure gas and being pulled sealingly on to the manipulator arm guided in the opening.

3. A work chamber (10) according to claim 1 or 2, **characterised in that** the sealing element (20; 20') is of toroidal shape.

4. A work chamber (10) according to claim 1 or 2, **characterised in that** the sealing element (20; 20') is tubular and is formed from an outer flexible tube (23), a front semi-torus (21, 21'), a rear semi-torus (22; 22') and two annular flanges (26, 27), which can be pulled sealingly on to the manipulator arm, the outer flexible tube (23) being connected at each end to the outer periphery of the semi-torus (21, 22; 21', 22') and the inner periphery of each semi-torus (21, 22; 21', 22') is fixed on an annular flange (26, 27).

5. A work chamber (10) according to claim 1 or 2, **characterised in that** the sealing element (20; 20') is tubular and is formed from an outer flexible tube (23), a front semi-torus (21; 21'), a rear semi-torus (22, 22') and an inner flexible tube which can be pulled sealingly on to the manipulator arm, the outer periphery of each semi-torus (21, 22; 21', 22') being connected to one end of the outer flexible tube and the inner periphery of each semi-torus (21, 22; 21', 22') being connected to one end of the inner flexible tube.

6. A work chamber (10) according to any one of claims 1 to 5, **characterised in that** the bushing tube (12) is formed in two parts from two half shells (12.1, 12.2) and the work chamber wall (11) is divisible at a joint edge (14) and comprises two relatively displaceable sliding door elements (11.1, 11.2) each having a half shell (12.1, 12.2) at the joint edge (14), while the half shells (12.1, 12.2) complement one another to form the bushing tube (12) at the sliding door elements (11.1, 11.2) abutting one another at the joint edge (14).

7. A work chamber (10) according to claim 6, **characterised in that** the sliding door elements (11.1, 11.2) are adapted to be coupled to a translatory drive via a coupling element.

8. A work chamber (10) according to claim 7, **characterised in that** the coupling element is a coupling pin (52) and the translatory drive is provided by means of a pneumatic cylinder (50).

9. A work chamber (10) according to any one of claims 1 to 8, **characterised in that** the bushing tube (12) comprises at least one flushing nozzle and/or gas nozzle directed in the direction of the interior of the work chamber (10).

10. A work chamber (10) according to any one of claims 1 to 9, **characterised by** a baffle plate (60) which is fixable between a robot hand (36.2) and a gripper (37) of the manipulator arm engaging into the work chamber (10) and which covers the flexible sealing bellows of the sealing element (20; 20') towards the work chamber.

11. A work chamber (10) according to claim 10, **characterised in that** the baffle plate (60) has at the edge an annular collar which surrounds the end of the bushing tube (12) directed towards the interior.

12. A work chamber according to claim 11, **characterised in that** the baffle plate (60) has an annular duct (62) and the bushing tube (12) has a projection (13) compatible with the annular duct (62), the annular duct (62) and the projection (13) engaging in one another and forming a labyrinth seal when the manipulator arm is in a starting position.

## Revendications

1. Chambre de travail (10) avec une ouverture automatiquement étanchéifiable pour un bras de manipulateur intervenant dans la chambre de travail, comprenant au moins une paroi de la chambre de travail (11) présentant un évidement, un tuyau traversant (12), s'insérant dans l'évidement jusqu'à la paroi de la chambre de travail (11) et raccordé à celle-ci, un élément d'étanchéité (20, 20') flexible, creux, pouvant admettre du gaz comprimé par le biais d'une vanne, s'étirant vers le haut, de façon étanche, sur un bras du manipulateur par au moins un de ses évidements intérieurs et présentant une paroi qui enveloppe totalement le bras du manipulateur et peut se placer au niveau de la paroi intérieure (23) du tuyau traversant (12), lorsque l'élément d'étanchéité (20, 20') reçoit du gaz comprimé.

2. Chambre de travail (10) selon la revendication 1, **caractérisée en ce qu'**au moins une partie du pourtour extérieur de l'élément d'étanchéité (20') est fixée au niveau du tuyau traversant (12), **en ce que** la section de l'évidement intérieur de l'élément d'étanchéité (20'), avant que l'élément d'étanchéité (20') reçoive du gaz comprimé, est plus grande que la section du bras du manipulateur et **en ce que** le bras du manipulateur peut être guidé librement au travers de l'évidement intérieur de l'élément d'étanchéité (20'), l'évidement intérieur de l'élément d'étanchéité (20, 20') diminuant lors de l'admission du gaz comprimé et s'étendant vers le haut, de façon étanche, sur le bras du manipulateur guidé dans l'évidement.

3. Chambre de travail (10) selon la revendication 1 ou 2, **caractérisée en ce que** l'élément d'étanchéité (20, 20') est torique.

4. Chambre de travail (10) selon la revendication 1 ou 2, **caractérisée en ce que** l'élément d'étanchéité (20, 20') est tubulaire et formé à partir d'un flexible extérieur (23), d'un demi-tore avant (21, 21'), d'un demi-tore arrière (22, 22') et de deux collerettes circulaires (26, 27) pouvant être tirées vers le haut, de façon étanche, sur le bras du manipulateur, et **en ce que** le flexible extérieur (23), côté extrémité, est dans chaque cas relié au pourtour extérieur du demi-tore (21, 22, 21', 22') et que dans chaque cas, le pourtour intérieur du demi-tore (21, 22, 21', 22') est fixé à une collerette circulaire (26, 27).

5. Chambre de travail (10) selon la revendication 1 ou 2, **caractérisée en ce que** l'élément d'étanchéité (20, 20') est tubulaire et formé à partir d'un flexible extérieur (23), d'un demi-tore avant (21, 21'), d'un demi-tore arrière (22, 22') et d'un flexible intérieur pouvant être tiré vers le haut de façon étanche sur le bras du manipulateur, et **en ce que** dans chaque cas, le pourtour extérieur du demi-tore (21, 22, 21', 22') est respectivement relié à une extrémité du flexible extérieur et que dans chaque cas, le pourtour intérieur du demi-tore (21, 22, 21', 22') est relié à une extrémité du flexible intérieur.

6. Chambre de travail (10) selon l'une quelconque des revendications 1 à 5, **caractérisée en ce que** le tuyau traversant (12) est en deux parties et composé de deux demi-coques (12.1, 12.2) et **en ce que** la paroi de la chambre de travail (11) peut être divisée au niveau d'un bord (14) et comprend deux éléments de porte coulissante (11.1, 11.2) déplaçables l'un par rapport à l'autre, avec respectivement une demi-coque (12.1, 12.2) au niveau du bord (14), sachant que les demi-coques (12.1, 12.2) se complètent pour former le tuyau traversant (12) lorsque les éléments de porte coulissante (11.1, 11.2) sont l'un près de l'autre au niveau du bord (14).

7. Chambre de travail (10) selon la revendication 6, **caractérisée en ce que** les éléments de porte coulissante (11.1, 11.2) peuvent être couplés par un élément de couplage à un organe de translation.

8. Chambre de travail (10) selon la revendication 7, **caractérisée en ce que** l'élément de couplage est un ergot de couplage (52) et **en ce que** l'organe de translation agit à l'aide d'un vérin pneumatique (50).

9. Chambre de travail (10) selon l'une quelconque des revendications 1 à 8, **caractérisée en ce que** le tuyau traversant (12) présente au moins une buse de balayage et/ou buse à gaz dirigée(s) vers l'intérieur de la chambre de travail (10).

10. Chambre de travail (10) selon l'une quelconque des revendications 1 à 9, **caractérisée par** une plaque de protection (60) pouvant être fixée entre une main de robot (36.2) et une griffe (37) du bras du manipulateur intervenant dans la chambre de travail (10) et protégeant le soufflet d'étanchéité flexible de l'élément d'étanchéité (20, 20') jusque dans la chambre de travail.

11. Chambre de travail selon la revendication 10, **caractérisée en ce que** la plaque de protection (60) présente, côté bord, un col en forme d'anneau qui entoure l'extrémité, orientée vers l'intérieur, du tuyau traversant (12).

12. Chambre de travail selon la revendication 11, **caractérisée en ce que** la plaque de protection (60) présente un canal circulaire (62) et **en ce que** le tuyau traversant (12) présente une saillie (13) coopérant avec le canal circulaire (62), de manière que, quand le bras du manipulateur est en position initiale, le canal circulaire (62) et la saillie (13) s'emboîtent l'un dans l'autre et forment une garniture à labyrinthe.
